# EUROPEAN PATENT APPLICATION

(11) **EP 4 793 815 A1**
(43) Date of publication of application: **19.08.2026**
(21) Application number: 26158228.2
(22) Date of filing: 12.02.2026
(51) Int. Cl.: G06F 40/106, G06F 3/048, G06F 40/166, G06F 8/33

(54) **EXTENSIONS TO DESIGN TOOL WITH MULTI-EDIT FUNCTION INCLUDING ALIGNMENT**

(30) Priority: 12.02.2025 US 202519052187
(71) Applicant: Figma, Inc., San Francisco, CA 94102 (US)
(72) Inventor: KUWAMOTO, Sho, San Francisco, 94102 (US); KLEIN, Nikolas, San Francisco, 94102 (US); ANDERSSON, Rasmus Mathias, San Francisco, 94102 (US); EVANS, Bradee, San Francisco, 94102 (US)
(74) Representative: Morrall, Jonathan Ian McLachlan

(57) **Abstract**

Computer-implemented design tool functions are described herein for automatically performing edits across different portions of one or more design layouts. A method for the tool includes aligning elements outside of frames together with multiple elements selected within frames. Another method includes modifying visual characteristics of multiple elements based on a determined primary element of the multiple elements. Another method includes modifying matching properties of multiple elements based on a determined primary element of the multiple elements. Another method includes copying and pasting multiple elements from a first set of frames into a second set of frames. Another method includes modifying constraints of multiple elements based on a determined primary element of the multiple elements.

## Description

### CROSS-REFERENCE TO RELATED APPLICATIONS

This application is a continuation in part of the co-pending U.S. patent application titled, "DESIGN TOOL WITH MULTI-EDIT FUNCTION," filed on March 18, 2024 and having Serial No. 18/607,798 , which is a continuation of U.S. patent application titled, "DESIGN TOOL WITH MULTI-EDIT FUNCTION," filed on July 23, 2021 and having Serial No. 17/384,578, issued as U.S. Patent No. 11,934,807, which is a continuation of U.S. patent application titled, "DESIGN TOOL WITH MULTI-EDIT FUNCTION," filed on May 26, 2020 and having Serial No. 16/883,002, issued as U.S. Patent No. 11,126,412, which claims the priority benefit of United States provisional patent application titled, "MULTI-EDIT COPY SYSTEM," filed May 24, 2019 and having Serial No. 62/852,954. The subject matter of these related applications is hereby incorporated herein by reference.

### TECHNICAL FIELD

The present disclosure relates to a design tool, and more particularly to a computer-implemented design tool including extensions to features to computer-automate multiple edits across portions of one or more design layouts.

### BACKGROUND

A designer uses computer-implemented design tools to create a design, layout, or interface for a wide variety of applications, such as, for different possible designs or states of a graphical user interface or one or more elements thereof, a logical flow through an application represented by a series of screens, a slide deck, and/or some other arrangement of data or other content. Computer-implemented design tools help to facilitate various aspects of the creation process; however, some aspects remain tedious. For instance, a design document may have multiple screens or pages that represent a series of states of a design layout, and substantial portions of the design layout may be the same or substantially similar across different screens. To edit such a design document, and in particular, the same or similar portions, a designer would spend considerable time and effort arranging and editing objects in a portion of one page of the design layout and providing separate and repetitive inputs to replicate any changes to the same or similar portions of potentially many other pages of the design layout.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### BRIEF DESCRIPTION OF THE DRAWINGS

The example embodiments of the present disclosure are illustrated by way of example, and not in way by limitation, in the figures of the accompanying drawings and in which like reference numerals refer to similar elements.
FIG. 1A is a flowchart for aligning, within a computer-implemented design tool, elements outside of frames together with multiple elements selected within frames, according to an embodiment.
FIG. 1B is a flowchart for modifying, within a computer-implemented design tool, visual characteristics of multiple elements based on a determined primary element of the multiple elements, according to an embodiment.
FIG. 1C is a flowchart for modifying, within a computer-implemented design tool, matching properties of multiple elements based on a determined primary element of the multiple elements, according to an embodiment.
FIG. 1D is a flowchart for copying and pasting, within a computer-implemented design tool, multiple elements from a first set of frames into a second set of frames, according to an embodiment.
FIG. 1E is a flowchart for modifying, within a computer-implemented design tool, constraints of multiple elements based on a determined primary element of the multiple elements, according to an embodiment.
FIG. 2A and FIG. 2B illustrate an example arrangement of user interfaces including frames and elements for performing the process described in FIG. 1A.
FIG. 3A and FIG. 3B illustrate an example arrangement of user interfaces including frames and elements for performing the process described in FIG. 1B.
FIG. 4A and FIG. 4B illustrate an example arrangement of user interfaces including frames and elements for performing the process described in FIG. 1C.
FIG. 5A, FIG. 5B, FIG. 5C, FIG. 5D, FIG. 5E, FIG. 5F, and FIG. 5G illustrate an example arrangement of user interfaces including frames and elements for performing the process described in FIG. 1D.
FIG. 6A and FIG. 6B illustrate an example arrangement of user interfaces including frames and elements for performing the process described in FIG. 1E.
FIG. 7 is a block diagram of a computing device in which the present disclosure may be embodied.
FIG. 8 is a block diagram of a basic software system for controlling the operation of the computing device.

### DESCRIPTION OF EXAMPLE EMBODIMENTS

In the following description, for the purposes of explanation, numerous specific details are set forth in order to provide a thorough understanding of the example embodiments of the present disclosure. It will be apparent, however, that the example embodiments may be practiced without these specific details. In other instances, well-known structures and devices are shown in block diagram form in order to avoid unnecessarily obscuring the example embodiments.

### GENERAL OVERVIEW

Computer-implemented design tool functions are described herein for editing particular content in a design layout and performing computer-automated, same or similar edits to corresponding content in other portions of the design layout.

In an embodiment, a computing device is configured to provide a design tool. The computing device controls a display device to display a design interface of the design tool to facilitate interaction therewith. The design interface provides functions and controls to create and edit a design layout. Generally, a design layout includes one or more frames, objects, and/or nodes. A frame is a container that holds part of the design layout, and may include objects and nested frames. An object corresponds to a design element, such as a text container, shape, border, media element or other content, input control, or navigational component. A node corresponds to a portion of the design layout and may represent an object, frame, or a position where an object or frame is to be placed, for example. The design tool can operate in a multi-edit mode, where edits to objects within an initial frame can be configured to propagate to corresponding objects in other frames.

According to an example of the multi-edit mode, the design tool is configured to allow elements outside of frames to be aligned together with multiple elements selected within frames. The computing device causes a plurality of elements to be displayed on the display device, or screen, the plurality of elements including a first element and a second element, where the first element is displayed within a first frame of the plurality of frames and the second element is displayed outside the first frame. The computing device receives input that indicates an alignment operation to perform on the plurality of elements. In response to receiving the input, the computing device causes the second element to be aligned to the first element based on the second element being closest to the first frame compared to other frames of the plurality of frames.

According to another example of the multi-edit mode, the design tool is configured to modify visual characteristics of multiple elements based on a determined primary element of the multiple elements. The computing device causes a plurality of elements to be displayed on a screen, the plurality of elements including a first element and a second element, where the first element is displayed within a first frame and the second element is displayed within a second frame that is different than the first frame. The computing device receives input that indicates an operation to perform relative to the plurality of elements. The computing device determines that the first element is a primary element. In response to receiving the input and based on the first element being the primary element, the computing device modifies a visual characteristic of the first element in a first manner and modifies a visual characteristic of the second element in a second manner that is different than the first manner.

According to another example of the multi-edit mode, the design tool is configured to modify matching properties of multiple elements based on a determined primary element of the multiple elements. The computing device causes a plurality of elements to be displayed on a screen. The computing device receives first input that selects a subset of the plurality of elements, the subset including a first element and a second element that is different than the first element. The computing device receives second input that modifies a value of a property of the first element. In response to receiving the second input and based on a determination that a value of the property of the second element equals the value of the property of the first element prior to receiving the second input, the computing device modifies the value of the property of the second element.

According to another example of the multi-edit mode, the design tool is configured to copy and paste multiple elements from a first set of frames into a second set of frames. The computing device causes a plurality of elements to be displayed on a screen. The computing device receives first input that indicates a copy operation of a subset of the plurality of elements, the subset including multiple elements in a first set of frames including (1) a first element that is in a first frame and (2) a second element that is different than the first element and that is in a second frame that is different than the first frame. The computing device receives second input that selects a second set of frames that does not include any frame in the first set of frames. The computing device receives third input that indicates a paste operation to paste the subset of the plurality of elements into the second set of frames. In response to receiving the second input and the third input, the computing device pastes the subset of the plurality of elements into the second set of frames.

According to another example of the multi-edit mode, the design tool is configured to modify constraints of multiple elements based on a determined primary element of the multiple elements. The computing device causes a plurality of elements to be displayed on a screen, the plurality of elements including a first element and a second element, where the first element is displayed within a first frame and the second element is displayed within a second frame that is different than the first frame. The computing device receives input that indicates an operation to modify a constraint of the plurality of elements relative to the frames in which the plurality of elements reside. The computing device determines that the first element is a primary element. In response to receiving input and based on the first element being the primary element, the computing device modifies the constraint of the first element in a first manner and modifies the constraint of the second element in the first manner.

These and other techniques described herein provide improvements in the technical field of computer-implemented design tools by adding extensions to multi-edit functionality to automatically perform edits across potentially many frames and objects throughout one or more design layouts, which helps to reduce the need for repetitive, tedious, and imprecise inputs from a designer.

### AUTOMATICALLY ALIGNING ELEMENTS OUTSIDE OF FRAMES

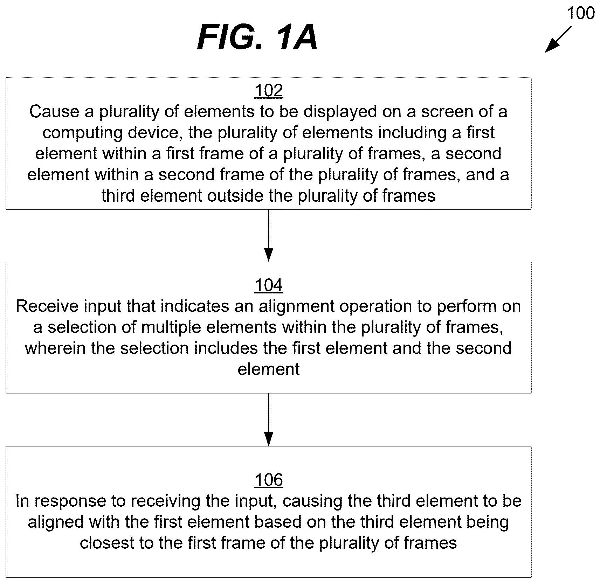

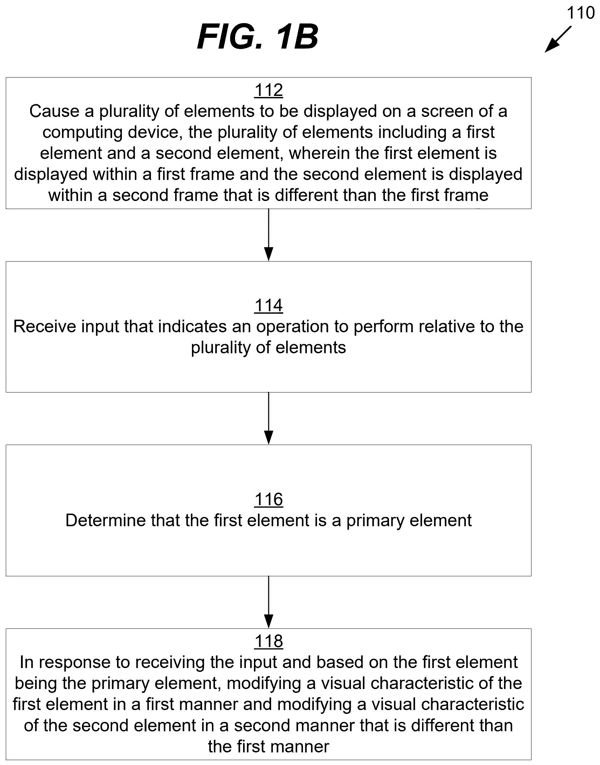

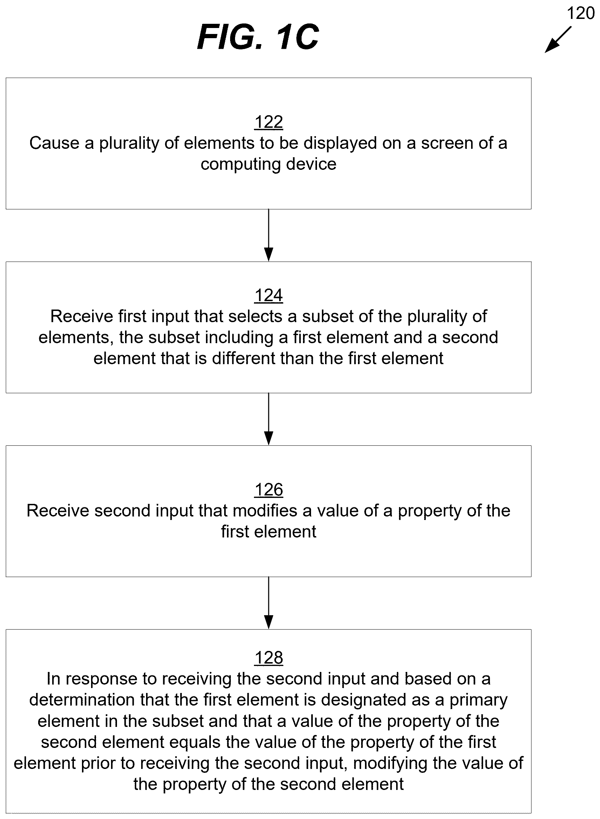

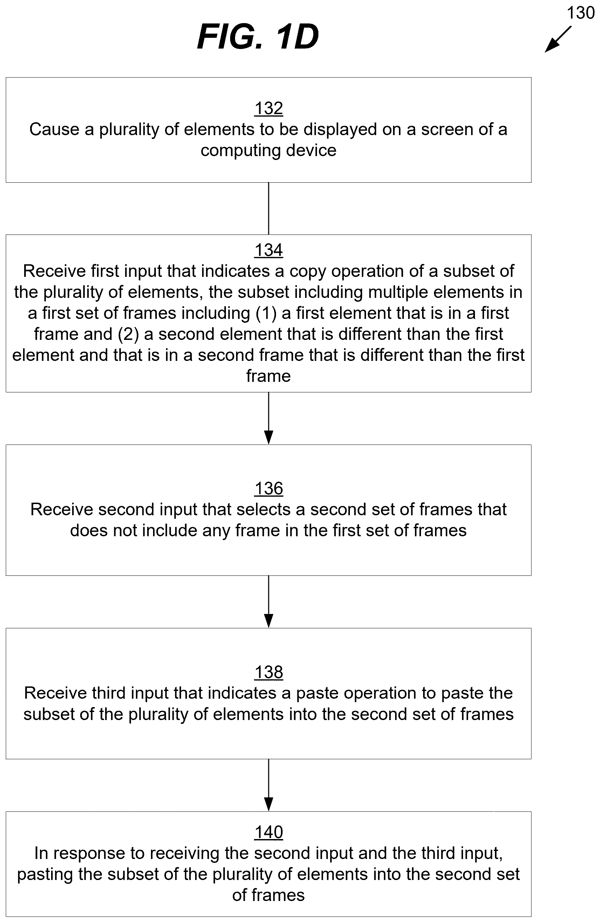

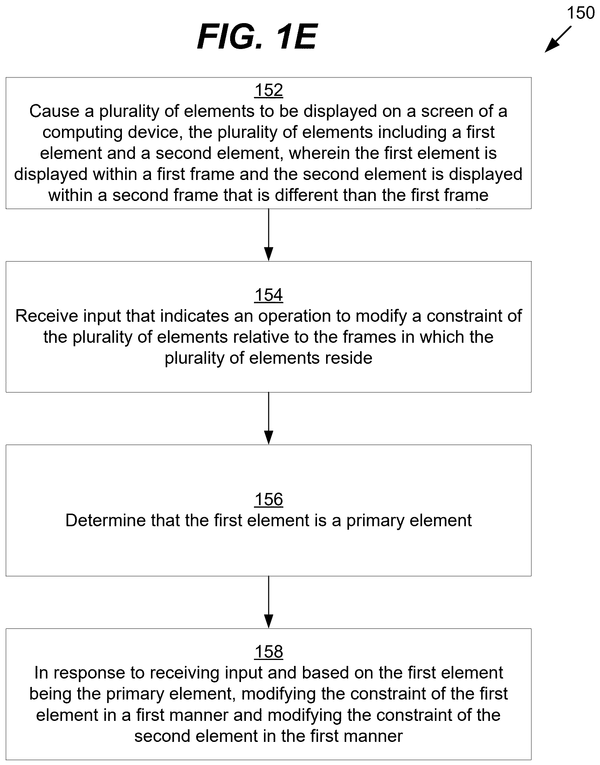

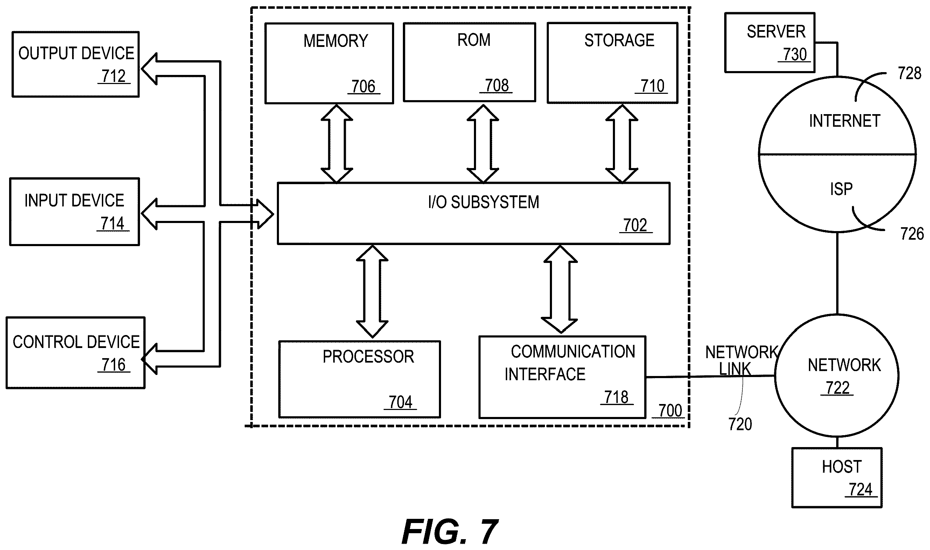

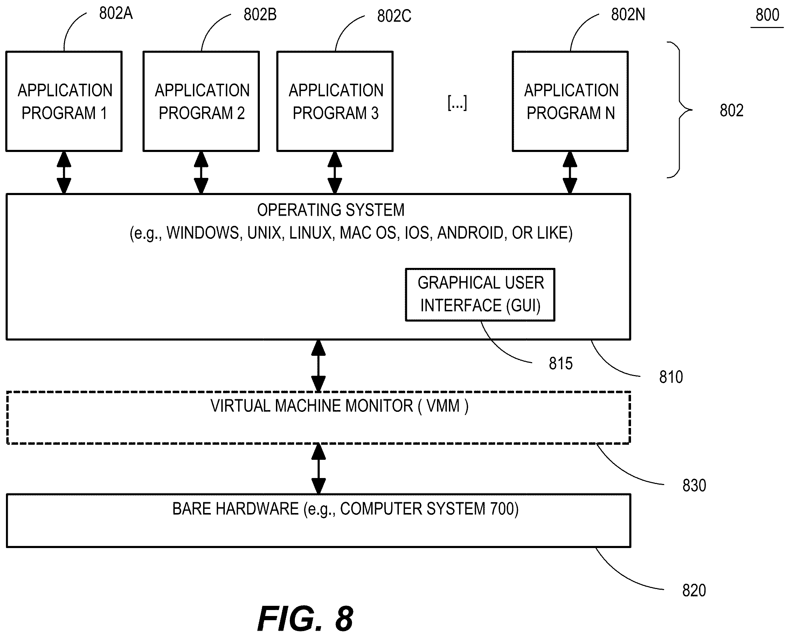

FIG. 1A is a flowchart 100 for aligning, within a computer-implemented design tool, elements outside of frames together with multiple elements selected within frames, according to an embodiment. The flowchart 100 of FIG. 1 may be implemented by a computing device, such as a computing device 700 of FIG. 7. The computing device includes a software system, such as the software system 800 of FIG. 8. The computing device utilizes the software system to execute instructions to provide a computer-implemented design tool that includes a design interface displayed on a display device. The computing device receives input from one or more input devices to control functionality of the design tool. The computing device may provide the design tool as an application executing on the computing device, and/or may execute instructions that are received from another computing device, such as an application server connected to the computing device through a wired or wireless network. In this context, a computing device as referred to herein may include one or more computing devices, for example, a single computing device or multiple computing devices in a cloud-based system.

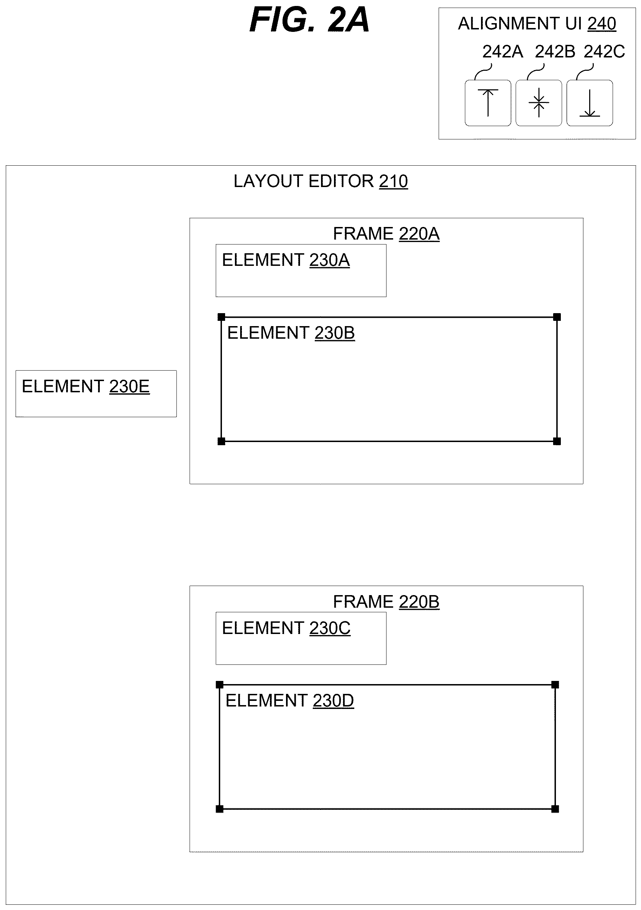

At block 102, a computing device causes a plurality of elements to be displayed on a screen, the plurality of elements including a first element, a second element, and a third element, where the first element is displayed within a first frame of a plurality of frames, the second element is displayed within a second frame of the plurality of frames, and the third element is displayed outside the plurality of frames. For example, referring to FIG. 2A, the computing device may cause layout editor 210 and alignment UI 240 to be shown on a screen, which may be resizable interface windows that can be configured as floating windows, docked windows, edge toolbars, or any other configuration. Layout editor 210 includes a plurality of elements, including element 230A, element 230B, element 230C, element 230D, and element 230E. Alignment UI 240 includes button 242A, button 242B, and button 242C, which may respectively correspond to top alignment, center alignment, and bottom alignment operations.

As shown in layout editor 210, elements 230A-230B are included in frame 220A, elements 230C-230D are included in frame 220B, and element 230E is outside of frames 220A and 220B. Elements 230B and 230D are selected in a multi-edit mode, indicated visually by selection outlines with corner squares. Thus, the first element may correspond to element 230B, the second element may correspond to element 230D, and the third element may correspond to element 230E.

At block 104, the computing device receives input that indicates an alignment operation to perform on a selection of multiple elements within the plurality of frames, wherein the selection includes the first element and the second element. For example, after elements 230B and 230D are selected in a multi-edit mode, a user may interact with button 242A, e.g. via mouse click, keyboard shortcut, touch input, or other user input to initiate a top alignment operation on the selected elements. When in multi-edit mode, the alignment operations may be aligned relative to a key object that may be inferred or manually selected. For example, for top alignment, the key object may be inferred to be the element that is the shortest distance to the top boundary within its frame relative to all the other frames. Thus, when performing the top alignment operation, the elements in the other frames are top aligned using the key object's vertical position relative to the top boundary.

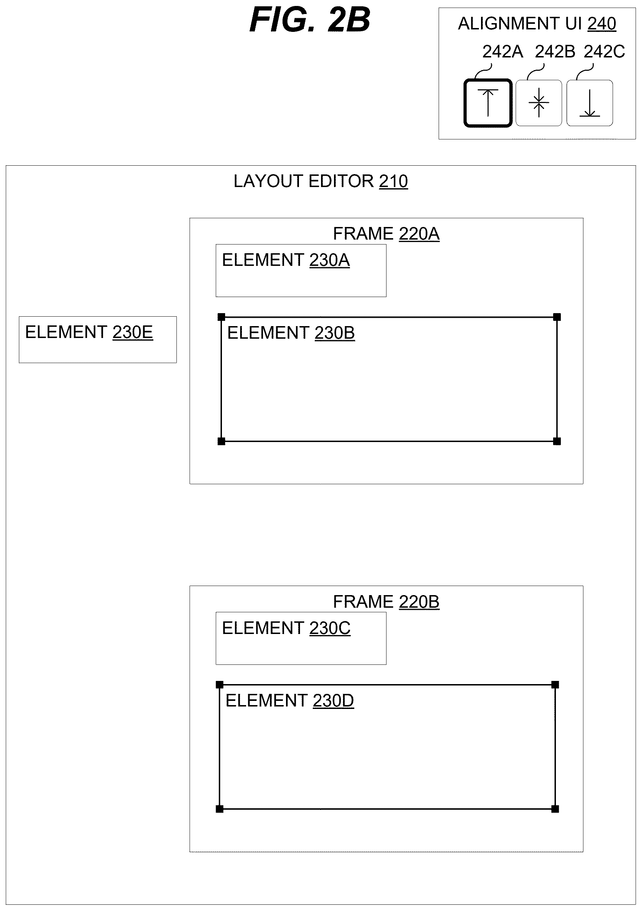

At block 106, in response to block 104, the computing device causes the third element to be aligned to the first element based on the third element being closest to the first frame compared to other frames of the plurality of frames. For example, the computing device may determine that element 230E is closer to frame 220A than frame 220B. Accordingly, the computing device causes element 230E to be aligned to element 230B in frame 220A, rather than element 230D in frame 220B. This can be observed in FIG. 2B, which may represent the user interface of FIG. 2A after the user interacts with button 242A. In this manner, elements that are outside of frames can be automatically aligned with the closest in-frame multi-edit element selection, thereby avoiding the time and effort of manual alignment of outside elements. While the example shown in FIG. 2A and 2B is shown for vertical alignment, the same principles can be applied to horizontal alignment or other alignment operations.

### MODIFYING VISUAL CHARACTERISTICS BASED ON PRIMARY ELEMENT

FIG. 1B is a flowchart 110 for modifying, within a computer-implemented design tool, visual characteristics of multiple elements based on a determined primary element of the multiple elements, according to an embodiment. A computing device performing flowchart 110 may apply many of the aspects discussed in relation to FIG. 1A.

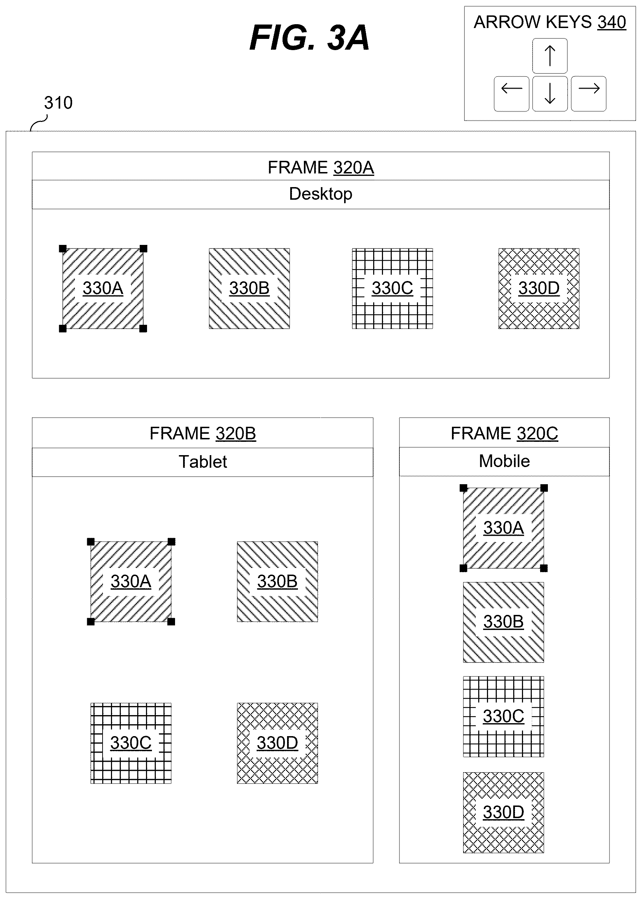

At block 112, a computing device causes a plurality of elements to be displayed on a screen, the plurality of elements including a first element and a second element, where the first element is displayed within a first frame and the second element is displayed within a second frame that is different than the first frame. For example, referring to FIG. 3A, the computing device may cause layout editor 310 to be shown on a screen, which includes a plurality of elements, including element 330A, element 330B, element 330C, and element 330D within each of frame 320A, frame 320B, and frame 320C. A user may utilize arrow keys 340 to provide input to the computing device. Arrow keys 340 may be part of a keyboard or other input device coupled to the computing device. For example, arrow keys 340 may be utilized to rearrange the ordering of elements within a frame.

As shown in layout editor 310, each of frame 320A-320C represent a different layout of different devices, or desktop, tablet, and mobile, respectively. Thus, element 330A may contain similar or same content within each of frames 320A-320C, and likewise for element 330B, element 330C, and element 330D. In the example shown in FIG. 3A, element 330A in each of frames 320A-320C is selected in a multi-edit mode. Thus, the first element may correspond to element 330A in frame 320C, which may later be determined to be a primary element, and the second element may correspond to element 330A in frame 320B. Note that while the elements are depicted with shared part numbers across the frames for simplicity, data representations of the shared part numbers may be stored as distinct entities, which are identified as corresponding multi-edit objects in metadata.

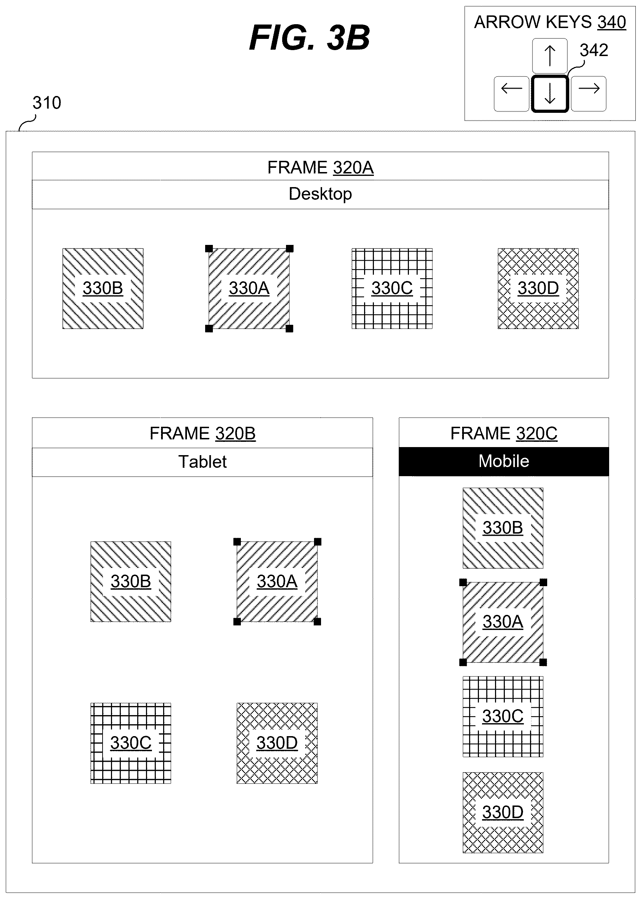

At block 114, the computing device receives input that indicates an operation to perform relative to the plurality of elements. For example, as shown in FIG. 3B, a user may press down arrow 342 of arrow keys 340 to initiate an ordering rearrangement of the plurality of elements within the selected frames.

At block 116, the computing device determines that the first element is a primary element. Since element 330A is selected in a multi-edit mode, it may be ambiguous which specific element 330A is being referenced for the operation in block 114. As shown in FIG. 3A, there are three possibilities, or element 330A in frame 320A, element 330A in frame 320B, and element 330A in frame 320C. As discussed above, element 330A in frame 320C may be determined to be the primary element.

Determining the primary element may be done explicitly, for example by the user manually selecting frame 320C as a primary frame, and thus element 330A within frame 320C as the primary element. Determining the primary element may also be done implicitly, for example by identifying the user's last edit operations as being on elements within frame 320C, thereby identifying frame 320C as the likely primary frame. In another example, frames 320A-320C may be panned, zoomed, or otherwise arranged or tiled within layout editor 310 such that frame 320C occupies a majority of the visible screen canvas, thereby indicating that the user likely wishes to focus on frame 320C as the primary frame. Similarly, element 330A may be positioned within the viewport of the screen such that element 330A is a larger portion or within a more central position of the viewport of the screen relative to the other elements, thereby indicating a likely focus on element 330A. In another example, element 330A may be selected as the primary element based on its position relative to the other elements in the plurality of elements. In yet another example, mouse cursor movements or operation history can be heuristically analyzed to determine the likely intended primary frame, and thus the primary element. Once the primary element is identified, the frame that contains the primary element may be visually identified in layout editor 310, for example by highlighting, changing color, bolding, etc. As shown in FIG. 3B, for example, frame 320C is highlighted as the primary frame that contains the primary element.

At block 118, in response to block 114 and block 116, the computing device modifies a visual characteristic of the first element in a first manner and modifies a visual characteristic of the second element in a second manner that is different than the first manner. For example, referring to FIG. 3B, the positioning of element 330A within frame 320C is moved downwards to swap with element 330B, but the positioning of element 330A within frame 320B is moved rightwards to swap with element 330B, where the rightwards movement is different from the downwards movement.

While the example shown in FIG. 3A and 3B is for element ordering, any other visual characteristic may also be modified. For example, besides ordering or positioning, the visual characteristic may include size, color, shadow, highlight, emphasis, orientation, capitalization, font, style, and other attributes. Additionally, the modification of the visual characteristic may be further based on the frame that contains the element. For example, if a frame is associated with a particular group or property, then the association may further adjust or influence the visual characteristic modification for the element within the frame.

Thus, the identified primary element defines how the operation of block 114 proceeds with respect to the input received in block 116. For example, if frame 320B was the primary frame instead of frame 320C, then the reordering operation may swap the positions of elements 330A and 330C, rather than swapping elements 330A and 330B. This is because down arrow 342 in the context of frame 320B means swapping the 1st and 3rd entities, or elements 330A and 330C, whereas down arrow 342 in the context of frame 320C means swapping the 1st and 2nd entities, or elements 330A and 330B. By identifying the primary element and adjusting the multi-edit operation accordingly, user intent can be more accurately identified and implemented, thereby avoiding the time and effort of undoing unwanted or accidental operations.

### MODIFYING MATCHING PROPERTIES BASED ON PRIMARY ELEMENT

FIG. 1C is a flowchart 120 for modifying, within a computer-implemented design tool, matching properties of multiple elements based on a determined primary element of the multiple elements, according to an embodiment. A computing device performing flowchart 120 may apply many of the aspects discussed in relation to FIG. 1A and FIG. 1B.

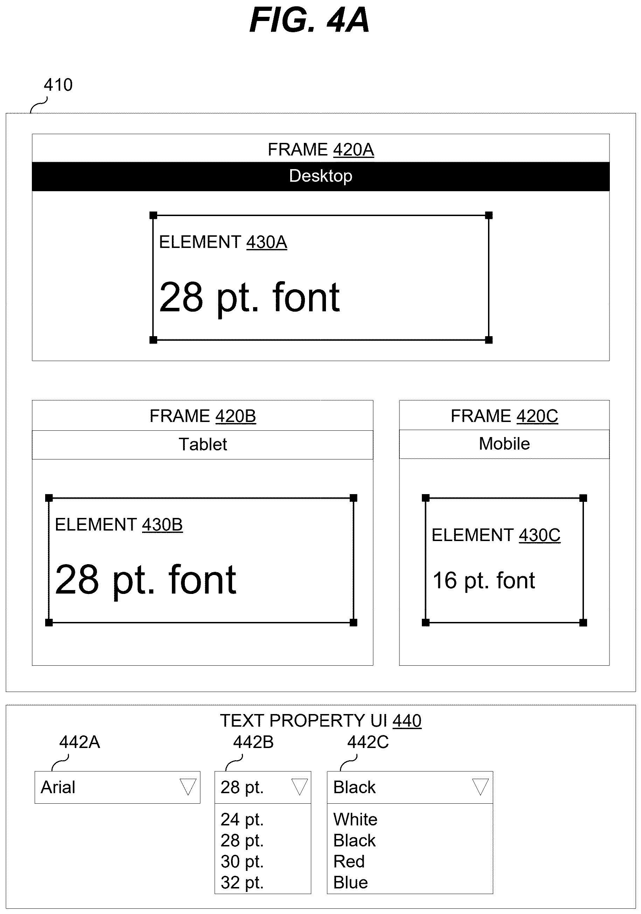

At block 122, a computing device causes a plurality of elements to be displayed on a screen. For example, referring to FIG. 4A, the computing device may cause layout editor 410 to be shown on a screen, which includes a plurality of elements, including element 430A, element 430B, and element 430C within respective frame 420A, frame 420B, and frame 420C. For illustrative purposes, other elements may also be present, but not shown. A user may utilize text property UI 440 to provide input to the computing device. For example, menu 442A may be used to change text font, menu 442B may be used to change text size, and menu 442C may be used to change text color.

At block 124, the computing device receives first input that selects a subset of the plurality of elements, the subset including a first element and a second element that is different than the first element. For example, as shown in FIG. 4A, elements 430A, 430B, and 430C are selected in a multi-edit mode. Since frame 420A may be determined to be the primary frame, e.g. by using a process similar to block 116 as described above, element 430A may be determined to be the primary element, and thus element 430A may correspond to the first element. Element 430B may be arbitrarily selected to correspond to the second element, but a process where element 430C is selected instead is also described below.

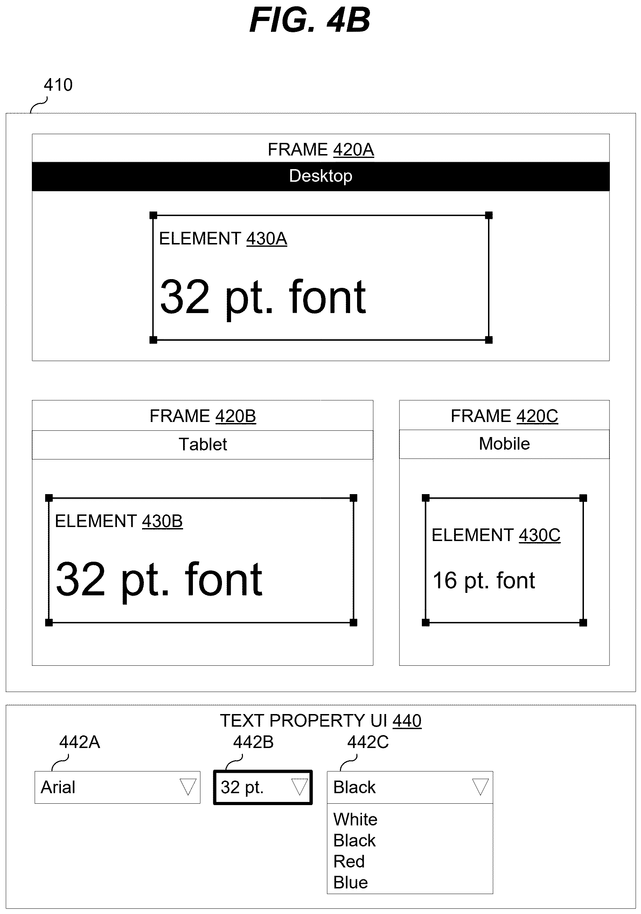

At block 126, the computing device receives second input that modifies a value of a property of the first element. For example, as shown in FIG. 4B, a user may interact with menu 442B to change the font size of element 430A from 28 pt. to 32 pt.

At block 128, in response to block 124 and determining that a value of the property of the second element equals the value of the property of the first element prior to block 126, the computing device modifies the value of the property of the second element. For example, referring to FIG. 4A, a value (28 pt.) of the property (text size) of the second element (element 430B) is determined to equal the value (28 pt.) of the property (text size) of the first element (element 430A) prior to block 126. Thus, as per block 126, the text size of element 430A is changed from 28 pt. to 32 pt., and as per block 128, the text size of element 430B is also changed from 28 pt. to 32 pt., as reflected in FIG. 4B.

Conversely, assume that instead of element 430B, element 430C corresponds to the second element in block 124. Since the text size of element 430C was 16 pt. prior to block 126, which is not equal to the text size of element 430A or 28 pt., the text size of element 430C is not modified. Thus, as shown in FIG. 4B, the text size of only elements 430A and 430B are modified, even though elements 430A-430C are selected in the multi-edit mode. In this manner, multi-edit element properties that have been intentionally changed from other elements can retain their changed properties instead of being accidentally modified with multi-edit operations, thereby avoiding the time and effort of undoing unwanted or accidental operations.

### COPYING AND PASTING ELEMENTS FROM FRAMES INTO OTHER FRAMES

FIG. 1D is a flowchart 130 for copying and pasting, within a computer-implemented design tool, multiple elements from a first set of frames into a second set of frames, according to an embodiment. A computing device performing flowchart 130 may apply many of the aspects discussed in relation to FIG. 1A, FIG. 1B and FIG. 1C.

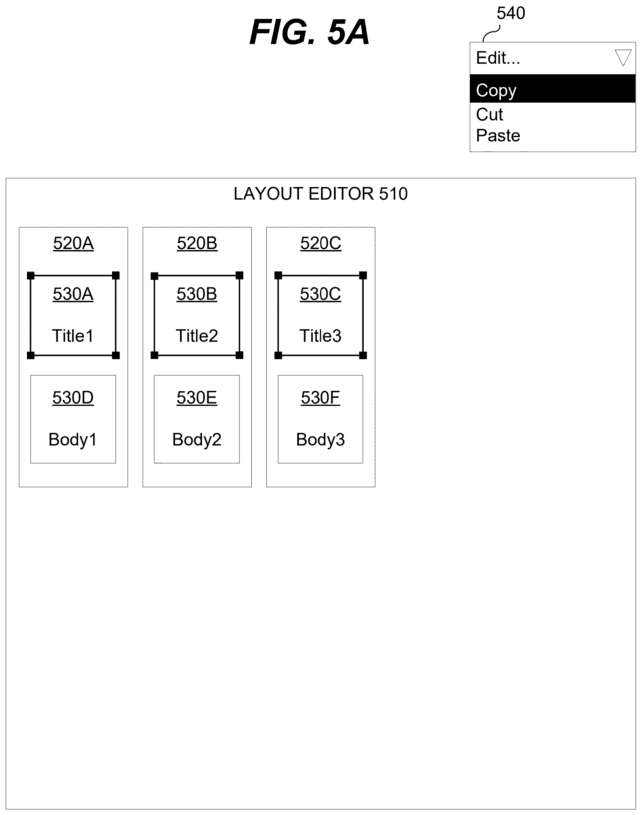

At block 132, a computing device causes a plurality of elements to be displayed on a screen. For example, referring to FIG. 5A, the computing device may cause layout editor 510 to be shown on a screen, which includes a plurality of elements, including element 530A, element 530B, element 530C, element 530D, element 530E, and element 530F. Frame 520A includes element 530A and element 530D. Frame 520B includes element 530B and element 530E. Frame 520C includes element 530C and element 530F. A user may utilize edit menu 540 to provide input to the computing device. For example, menu 540 may be used to copy, cut, and paste elements from and into frames.

At block 134, the computing device receives first input that indicates a copy operation of a subset of the plurality of elements, the subset including multiple elements in a first set of frames including (1) a first element that is in a first frame and (2) a second element that is different than the first element and that is in a second frame that is different than the first frame. For example, referring to FIG. 5A, the subset may correspond to elements 530A-530C as indicated by the multi-edit selection, where element 530A is the first element and element 530B is the second element.

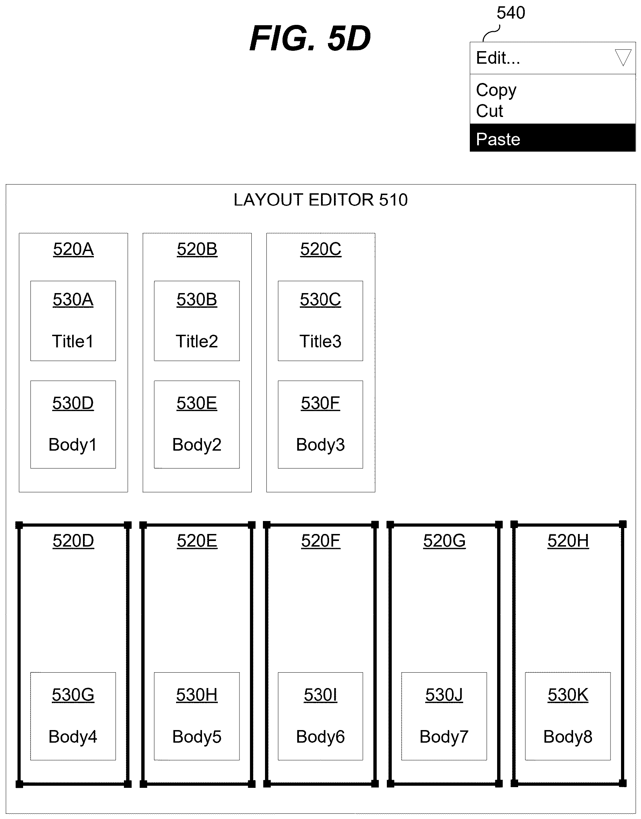

At block 136, the computing device receives second input that selects a second set of frames that does not include any frame in the first set of frames. For example, referring to FIG. 5D, as indicated by the multi-edit selection, the second set of frames may correspond to frame 520D, frame 520E, frame 520F, frame 520G, and frame 520H, which do not include any frame in the first set of frames, or frames 520A-520C.

At block 138, the computing device receives third input that indicates a paste operation to paste the copied subset of the plurality of elements from block 134 into the second set of frames from block 136. For example, referring to FIG. 5D, the user may interact with menu 540 to select a paste operation. FIG. 5D represents a state prior to the completion of the paste operation.

At block 140, in response to block 136 and block 138, the computing device pastes the subset of the plurality of elements from block 134 into the second set of frames from block 136. In the case where the number of frames between the first set and the second set are the same, then it is a straightforward process, as each element from each frame in the first set can be pasted into a respective frame in the second set. When the number of frames in the second set differs from the number of frames in the first set, then the computing device needs to decide how to distribute the elements between the second set of frames.

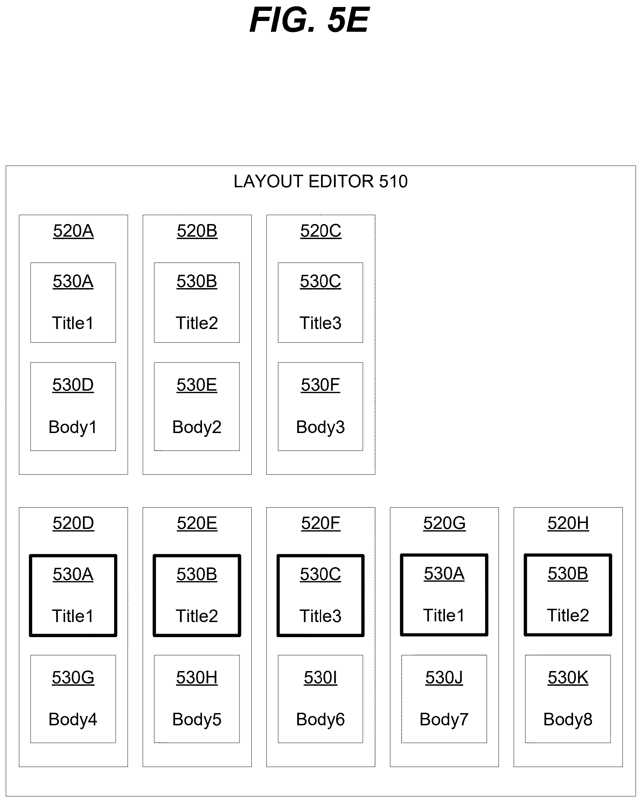

When the second set has a larger number of frames, then the elements may be repeated from the first set to fill out the additional frames. For example, referring to FIG. 5E, it is observed that frame 520G and frame 520H are also populated with element 530A and element 530B, respectively. In this manner, the additional frames are pre-populated with repeating elements, thereby providing a template for efficient design processes.

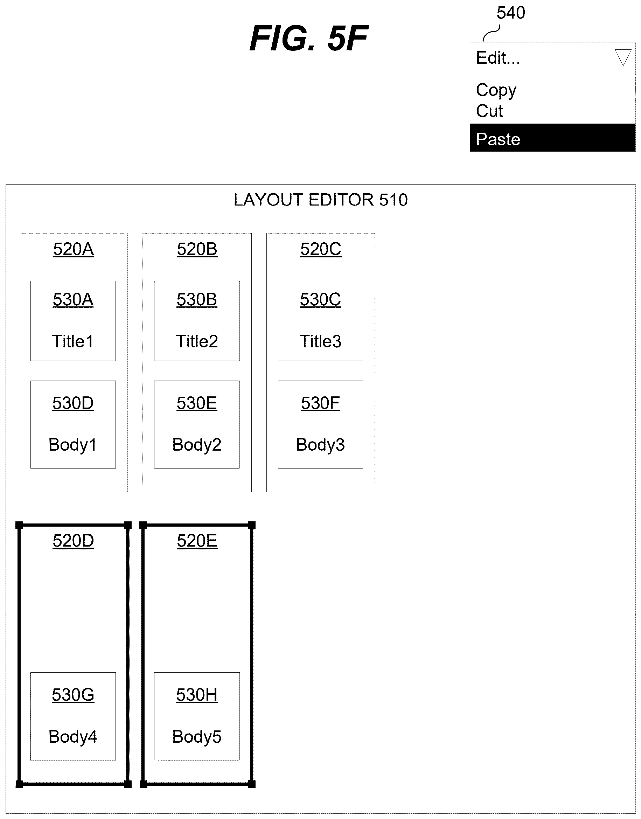

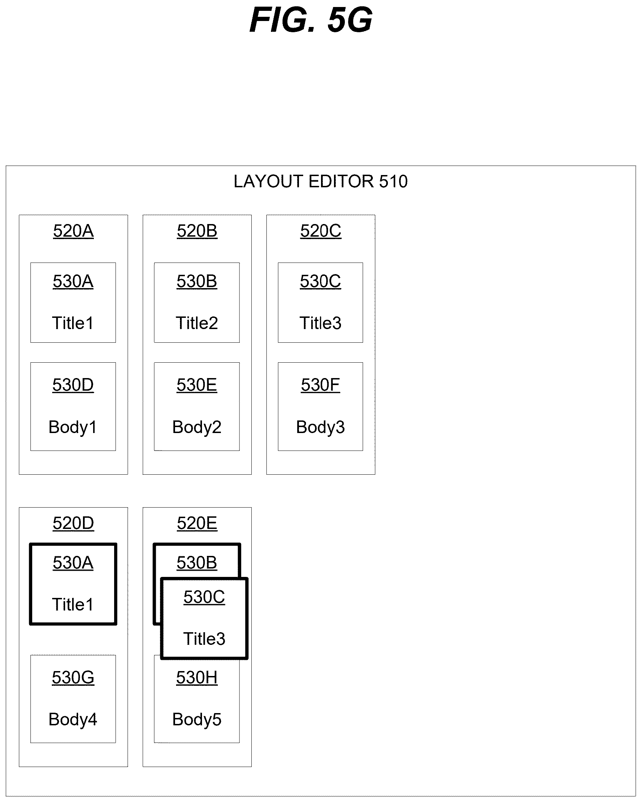

When the second set has a smaller number of frames, then the elements may be copied and pasted from frame to frame until the final frame, where all remaining elements from the first set are pasted. For example, referring to FIG. 5F, it is observed that the second set contains two frames, or frame 520D and frame 520E, whereas the first set contains three frames, or frames 520A-520C. The results of the paste operation can be observed in FIG. 5G, where element 530B and element 530C are pasted into frame 520E. In this manner, no data is lost in the copy and paste operation, thereby preventing accidental deletion of data.

The example illustrated in FIG. 5G assumes that elements 530A, 530B, and 530C are of equal importance, or all primary elements, and therefore all elements are preserved in the paste operation. However, in some cases, only some elements may be determined to be primary elements. In this case, the remaining elements may be considered to be secondary elements. For example, assume that only element 530A is determined to be a primary element, with elements 530B and 530C as secondary elements. In this case, the paste operation shown in FIG. 5G may omit pasting element 530C into frame 520E, as secondary elements may be permitted to be dropped or substituted in paste operations. In another example, assume element 530C is determined to be a primary element, with elements 530A and 530B as secondary elements. In this case, the paste operation shown in FIG. 5G may proceed by pasting element 530A into frame 520D and pasting element 530C into frame 520E while omitting element 530B, thereby substituting element 530B with element 530C. Thus, when pasting into another set of frames, the selected elements may be preserved, dropped, or substituted depending on whether the elements are determined to be primary or secondary elements.

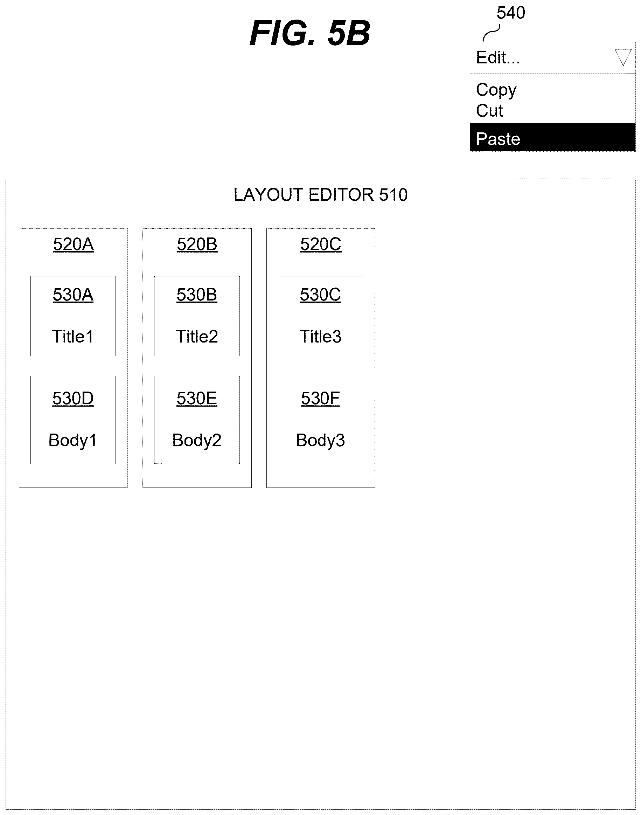

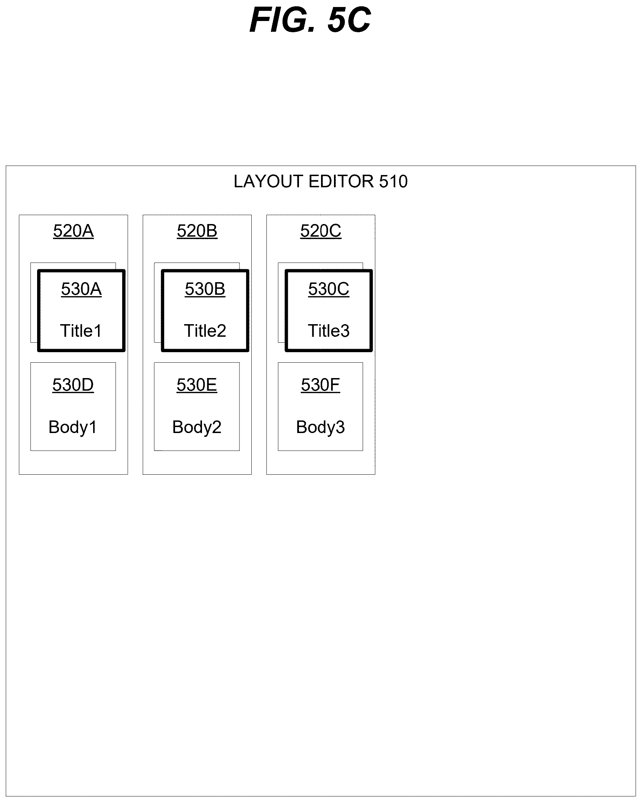

In the case where the second input of block 136 selects an empty set of frames instead of the second set of frames, then the elements may be assumed to be intended to be pasted into their original frames. This is shown in FIG. 5B and FIG. 5C, where duplicates of elements 530A-530C are pasted into their respective original frames 520A-520C.

### MODIFYING CONSTRAINTS BASED ON PRIMARY ELEMENT

FIG. 1E is a flowchart 150 for modifying, within a computer-implemented design tool, constraints of multiple elements based on a determined primary element of the multiple elements, according to an embodiment. A computing device performing flowchart 150 may apply many of the aspects discussed in relation to FIG. 1A, FIG. 1B, FIG. 1C and FIG. 1D.

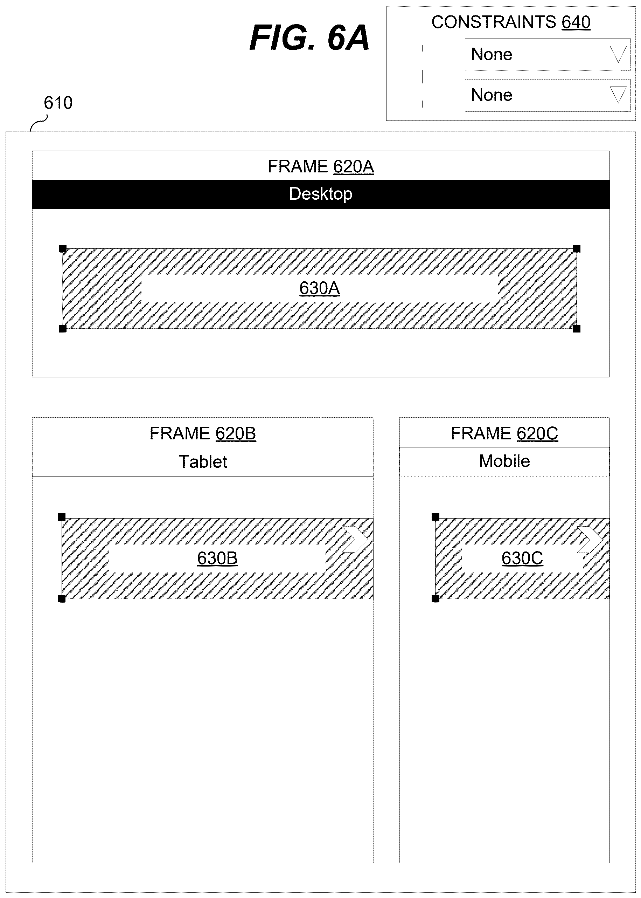

At block 152, a computing device causes a plurality of elements to be displayed on a screen, the plurality of elements including a first element and a second element, where the first element is displayed within a first frame and the second element is displayed within a second frame that is different than the first frame. For example, referring to FIG. 6A, the computing device may cause layout editor 610 to be shown on a screen, which includes a plurality of elements, including element 630A (first element), element 630B (second element), and element 630C within respective frame 620A (first frame), frame 620B (second frame), and frame 620C. For illustrative purposes, other elements may also be present, but not shown. Initially, the user may generate elements 630A-630C as identical elements that are intended to be adapted for different layouts. Thus, while element 630A may fit properly in the desktop context of frame 620A, elements 630B and 630C may overflow past the right frame edges in the tablet or mobile context of frame 620B and frame 620B. A user may utilize constraints 640 to provide input to the computing device. For example, constraints 640 may be used to constrain elements with respect to frame edges, such as by maintaining a minimum border or padding size.

At block 154, the computing device receives input that indicates an operation to modify a constraint of the plurality of elements relative to the frames in which the plurality of elements reside. For example, constraints 640 may be used to constrain elements such that a minimum padding is maintained from the top edge, bottom edge, left edge, and/or right edge of the frame containing each element. In the example described herein, constraints 640 may be used to constrain the elements relative to all four frame edges.

At block 156, the computing device determines that the first element is a primary element. For example, as shown in FIG. 6A, elements 630A, 630B, and 630C are selected in a multi-edit mode. Since frame 620A may be determined to be the primary frame, e.g. by using a process similar to block 116 as described above, element 630A may be determined to be the primary element.

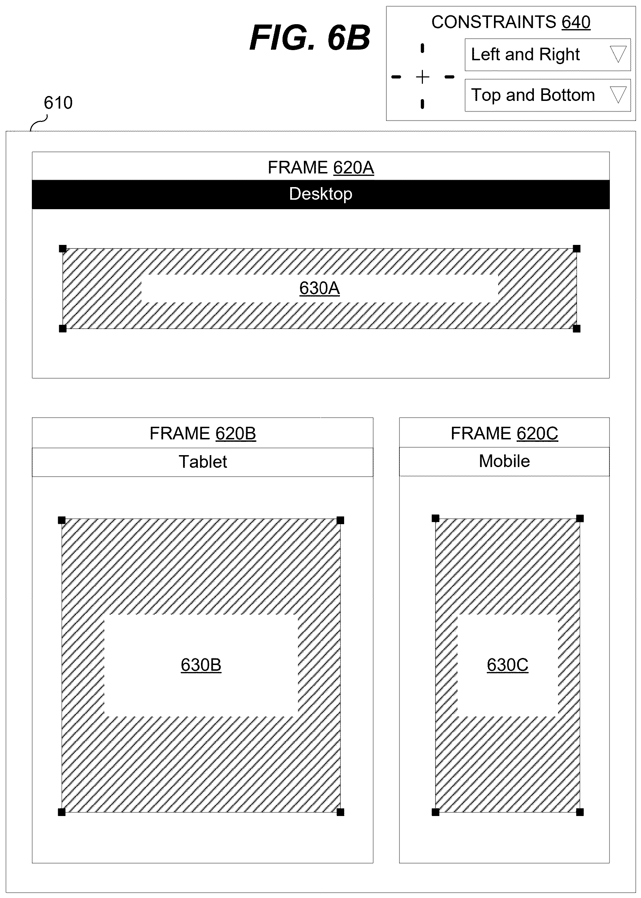

At block 158, in response to block 154 and block 156, the computing device modifies the constraint of the first element in a first manner and modifies the constraint of the second element in the first manner. For example, referring to FIG. 6B, the user may have selected all four edges using constraints 640 at block 154. Focusing on the constraint of right edge padding, element 630A may be constrained to maintain a minimum padding from the right edge of frame 620A, and element 630B may be constrained to maintain the same minimum padding, but from the right edge of frame 620B. Similar constraints may also be applied for top, bottom, and left padding. Thus, elements 630B and 630C may be resized to maintain the minimum padding requirements imposed by constraints 640. Since element 630A may already be compliant with constraints 640, element 630A may remain unmodified. Thus, in some implementations, the minimum padding of constraints 640 may be based on existing padding of the primary element relative to its enclosing frame, or element 630A relative to frame 620A. In other implementations, the minimum padding size may be specified by using manual controls or other methods. While element frame padding is shown as one example constraint, any constraint can be modified using the method described above. In this manner, multiple elements within frames can be readily constrained relative to their enclosing frames, thereby providing a consistent look and feel while avoiding time consuming manual adjustments to individual elements.

### HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

For example, FIG. 7 is a block diagram that illustrates a computer system 700 upon which an embodiment of the invention may be implemented. Computer system 700 includes a bus 702 or other communication mechanism for communicating information, and a hardware processor 704 coupled with bus 702 for processing information. Hardware processor 704 may be, for example, a general purpose microprocessor.

Computer system 700 also includes a main memory 706, such as a random access memory (RAM) or other dynamic storage device, coupled to bus 702 for storing information and instructions to be executed by processor 704. Main memory 706 also may be used for storing temporary variables or other intermediate information during execution of instructions to be executed by processor 704. Such instructions, when stored in non-transitory storage media accessible to processor 704, render computer system 700 into a special-purpose machine that is customized to perform the operations specified in the instructions.

Computer system 700 further includes a read only memory (ROM) 708 or other static storage device coupled to bus 702 for storing static information and instructions for processor 704. A storage device 710, such as a magnetic disk, optical disk, or solid-state drive is provided and coupled to bus 702 for storing information and instructions.

Computer system 700 may be coupled via bus 702 to a display 712, such as a cathode ray tube (CRT), for displaying information to a computer user. An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane.

Computer system 700 may implement the techniques described herein using customized hard-wired logic, one or more ASICs or FPGAs, firmware and/or program logic which in combination with the computer system causes or programs computer system 700 to be a special-purpose machine. According to one embodiment, the techniques herein are performed by computer system 700 in response to processor 704 executing one or more sequences of one or more instructions contained in main memory 706. Such instructions may be read into main memory 706 from another storage medium, such as storage device 710. Execution of the sequences of instructions contained in main memory 706 causes processor 704 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 710. Volatile media includes dynamic memory, such as main memory 706. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 702. Transmission media can also take the form of acoustic or light waves, such as those generated during radio-wave and infra-red data communications.

Various forms of media may be involved in carrying one or more sequences of one or more instructions to processor 704 for execution. For example, the instructions may initially be carried on a magnetic disk or solid-state drive of a remote computer. The remote computer can load the instructions into its dynamic memory and send the instructions over a telephone line using a modem. A modem local to computer system 700 can receive the data on the telephone line and use an infra-red transmitter to convert the data to an infra-red signal. An infra-red detector can receive the data carried in the infra-red signal and appropriate circuitry can place the data on bus 702. Bus 702 carries the data to main memory 706, from which processor 704 retrieves and executes the instructions. The instructions received by main memory 706 may optionally be stored on storage device 710 either before or after execution by processor 704.

Computer system 700 also includes a communication interface 718 coupled to bus 702. Communication interface 718 provides a two-way data communication coupling to a network link 720 that is connected to a local network 722. For example, communication interface 718 may be an integrated services digital network (ISDN) card, cable modem, satellite modem, or a modem to provide a data communication connection to a corresponding type of telephone line. As another example, communication interface 718 may be a local area network (LAN) card to provide a data communication connection to a compatible LAN. Wireless links may also be implemented. In any such implementation, communication interface 718 sends and receives electrical, electromagnetic, or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the worldwide packet data communication network now commonly referred to as the "Internet" 728. Local network 722 and Internet 728 both use electrical, electromagnetic, or optical signals that carry digital data streams. The signals through the various networks and the signals on network link 720 and through communication interface 718, which carry the digital data to and from computer system 700, are example forms of transmission media.

Computer system 700 can send messages and receive data, including program code, through the network(s), network link 720 and communication interface 718. In the Internet example, a server 1030 might transmit a requested code for an application program through Internet 728, ISP 726, local network 722 and communication interface 718.

The received code may be executed by processor 704 as it is received, and/or stored in storage device 710, or other non-volatile storage for later execution.

A computer system process comprises an allotment of hardware processor time, and an allotment of memory (physical and/or virtual), the allotment of memory being for storing instructions executed by the hardware processor, for storing data generated by the hardware processor executing the instructions, and/or for storing the hardware processor state (e.g. content of registers) between allotments of the hardware processor time when the computer system process is not running. Computer system processes run under the control of an operating system, and may run under the control of other programs being executed on the computer system.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

### SOFTWARE OVERVIEW

FIG. 11 is a block diagram of a basic software system 800 that may be employed for controlling the operation of computing device 700. Software system 800 and its components, including their connections, relationships, and functions, is meant to be exemplary only, and not meant to limit implementations of the example embodiment(s). Other software systems suitable for implementing the example embodiment(s) may have different components, including components with different connections, relationships, and functions.

Software system 800 is provided for directing the operation of computing device 700. Software system 800, which may be stored in system memory (RAM) 706 and on fixed storage (e.g., hard disk or flash memory) 710, includes a kernel or operating system (OS) 810.

The OS 810 manages low-level aspects of computer operation, including managing execution of processes, memory allocation, file input and output (I/O), and device I/O. One or more application programs, represented as 802A, 802B, 802C ... 802N, may be "loaded" (e.g., transferred from fixed storage 710 into memory 706) for execution by the system 800. The applications or other software intended for use on device 800 may also be stored as a set of downloadable computer-executable instructions, for example, for downloading and installation from an Internet location (e.g., a Web server, an app store, or other online service).

Software system 800 includes a graphical user interface (GUI) 815, for receiving user commands and data in a graphical (e.g., "point-and-click" or "touch gesture") fashion. These inputs, in turn, may be acted upon by the system 800 in accordance with instructions from operating system 810 and/or application(s) 802. The GUI 815 also serves to display the results of operation from the OS 810 and application(s) 802, whereupon the user may supply additional inputs or terminate the session (e.g., log off).

OS 810 can execute directly on the bare hardware 820 (e.g., processor(s) 704) of device 700. Alternatively, a hypervisor or virtual machine monitor (VMM) 830 may be interposed between the bare hardware 820 and the OS 810. In this configuration, VMM 830 acts as a software "cushion" or virtualization layer between the OS 810 and the bare hardware 820 of the device 700.

VMM 830 instantiates and runs one or more virtual machine instances ("guest machines"). Each guest machine comprises a "guest" operating system, such as OS 810, and one or more applications, such as application(s) 802, designed to execute on the guest operating system. The VMM 830 presents the guest operating systems with a virtual operating platform and manages the execution of the guest operating systems.

In some instances, the VMM 830 may allow a guest operating system to run as if it is running on the bare hardware 820 of device 700 directly. In these instances, the same version of the guest operating system configured to execute on the bare hardware 820 directly may also execute on VMM 830 without modification or reconfiguration. In other words, VMM 830 may provide full hardware and CPU virtualization to a guest operating system in some instances.

In other instances, a guest operating system may be specially designed or configured to execute on VMM 830 for efficiency. In these instances, the guest operating system is "aware" that it executes on a virtual machine monitor. In other words, VMM 830 may provide para-virtualization to a guest operating system in some instances.

The above-described basic computer hardware and software is presented for purpose of illustrating the basic underlying computer components that may be employed for implementing the example embodiment(s). The example embodiment(s), however, are not necessarily limited to any particular computing environment or computing device configuration. Instead, the example embodiment(s) may be implemented in any type of system architecture or processing environment that one skilled in the art, in light of this disclosure, would understand as capable of supporting the features and functions of the example embodiment(s) presented herein.

### EXTENSIONS AND ALTERNATIVES

Although some of the figures described in the foregoing specification include flow diagrams with steps that are shown in an order, the steps may be performed in any order, and are not limited to the order shown in those flowcharts. Additionally, some steps may be optional, may be performed multiple times, and/or may be performed by different components. All steps, operations and functions of a flow diagram that are described herein are intended to indicate operations that are performed using programming in a special-purpose computer or general-purpose computer, in various embodiments. In other words, each flow diagram in this disclosure, in combination with the related text herein, is a guide, plan or specification of all or part of an algorithm for programming a computer to execute the functions that are described. The level of skill in the field associated with this disclosure is known to be high, and therefore the flow diagrams and related text in this disclosure have been prepared to convey information at a level of sufficiency and detail that is normally expected in the field when skilled persons communicate among themselves with respect to programs, algorithms and their implementation.

Various aspects of the present disclosure are described in the following numbered clauses.
CLAUSE 1. A method comprising: causing a plurality of elements to be displayed on a screen of a computing device, the plurality of elements including a first element within a first frame of a plurality of frames, a second element within a second frame of the plurality of frames, and a third element outside the plurality of frames; receiving input that indicates an alignment operation to perform on a selection of multiple elements within the plurality of frames, wherein the selection includes the first element and the second element; and in response to receiving the input, causing the third element to be aligned with the first element based on the third element being closest to the first frame of the plurality of frames; wherein the method is performed by one or more computing devices.
CLAUSE 2. The method of clause 1, wherein the alignment operation comprises one of: top alignment, center alignment, or bottom alignment.
CLAUSE 3. A method comprising: causing a plurality of elements to be displayed on a screen of a computing device; receiving first input that indicates a copy operation of a subset of the plurality of elements, the subset including multiple elements in a first set of frames and including (1) a first element that is in a first frame and (2) a second element that is different than the first element and that is in a second frame that is different than the first frame; receiving second input that selects a second set of frames that does not include any frame in the first set of frames; receiving third input that indicates a paste operation to paste the subset of the plurality of elements into the second set of frames; and in response to receiving the second input and the third input, pasting the subset of the plurality of elements into the second set of frames; wherein the method is performed by one or more computing devices.
CLAUSE 4. The method of clause 3, wherein the number of frames in the second set of frames is less than the number of frames in the first set of frames.
CLAUSE 5. The method of clauses 3 or 4, wherein the pasting of the subset of the plurality of elements comprises including multiple elements in a last frame of the second set of frames.
CLAUSE 6. The method of any of claims 3-5, wherein the pasting of the subset of the plurality of elements is based on identifying primary elements and secondary elements within the plurality of elements.
CLAUSE 7. The method of any of claims 3-6, wherein the pasting of the subset of the plurality of elements drops one or more of the secondary elements.
CLAUSE 8. The method of any of claims 3-7, wherein the pasting of the subset of the plurality of elements substitutes one or more of the secondary elements with the primary elements.
CLAUSE 9. The method of any of claims 3-8, wherein the number of frames in the second set of frames is greater than the number of frames in the first set of frames, and wherein the pasting of the subset of the plurality of elements is into each of the second set of frames.
CLAUSE 10. The method of any of claims 3-9, wherein the pasting into each of the second set of frames is by repeating the subset of the plurality of elements.
CLAUSE 11. One or more non-transitory computer-readable storage medium storing instructions that, when executed by one or more processors, cause: causing a plurality of elements to be displayed on a screen of a computing device, the plurality of elements including a first element within a first frame of a plurality of frames, a second element within a second frame of the plurality of frames, and a third element outside the plurality of frames; receiving input that indicates an alignment operation to perform on a selection of multiple elements within the plurality of frames, wherein the selection includes the first element and the second element; and
   in response to receiving the input, causing the third element to be aligned with the first element based on the third element being closest to the first frame of the plurality of frames.
CLAUSE 12. One or more non-transitory computer-readable storage medium storing instructions that, when executed by one or more processors, cause the one or more processors to perform functions comprising the method of clause 2.
CLAUSE 13. One or more non-transitory computer-readable storage medium storing instructions that, when executed by one or more processors, cause the one or more processors to perform functions comprising the method of clause 3.
CLAUSE 14. One or more non-transitory computer-readable storage medium storing instructions that, when executed by one or more processors, cause the one or more processors to perform functions comprising the method of clause 4.
CLAUSE 15. One or more non-transitory computer-readable storage medium storing instructions that, when executed by one or more processors, cause the one or more processors to perform functions comprising the method of clause 5.
CLAUSE 16. One or more non-transitory computer-readable storage medium storing instructions that, when executed by one or more processors, cause the one or more processors to perform functions comprising the method of clause 6.
CLAUSE 17. One or more non-transitory computer-readable storage medium storing instructions that, when executed by one or more processors, cause the one or more processors to perform functions comprising the method of clause 7.
CLAUSE 18. One or more non-transitory computer-readable storage medium storing instructions that, when executed by one or more processors, cause the one or more processors to perform functions comprising the method of clause 8.
CLAUSE 19. One or more non-transitory computer-readable storage medium storing instructions that, when executed by one or more processors, cause the one or more processors to perform functions comprising the method of clause 9.
CLAUSE 20. One or more non-transitory computer-readable storage medium storing instructions that, when executed by one or more processors, cause the one or more processors to perform functions comprising the method of clause 10.

Any and all combinations of any of the claim elements recited in any of the claims and/or any elements described in this application, in any fashion, fall within the contemplated scope of the present invention and protection.

In the foregoing specification, the example embodiment(s) of the present invention have been described with reference to numerous specific details. However, the details may vary from implementation to implementation according to the requirements of the particular implement at hand. The example embodiment(s) are, accordingly, to be regarded in an illustrative rather than a restrictive sense.

## Claims

1. A method comprising:
causing a plurality of elements to be displayed on a screen of a computing device;
receiving first input that indicates a copy operation of a subset of the plurality of elements, the subset including multiple elements in a first set of frames and including (1) a first element that is in a first frame and (2) a second element that is different than the first element and that is in a second frame that is different than the first frame;
receiving second input that selects a second set of frames that does not include any frame in the first set of frames;
receiving third input that indicates a paste operation to paste the subset of the plurality of elements into the second set of frames; and
in response to receiving the second input and the third input, pasting the subset of the plurality of elements into the second set of frames;
wherein the method is performed by one or more computing devices.

2. The method of Claim 1, wherein the number of frames in the second set of frames is less than the number of frames in the first set of frames.

3. The method of Claim 2, wherein the pasting of the subset of the plurality of elements comprises including multiple elements in a last frame of the second set of frames.

4. The method of Claim 2, wherein the pasting of the subset of the plurality of elements is based on identifying primary elements and secondary elements within the plurality of elements.

5. The method of Claim 4, wherein the pasting of the subset of the plurality of elements drops one or more of the secondary elements.

6. The method of Claim 4, wherein the pasting of the subset of the plurality of elements substitutes one or more of the secondary elements with the primary elements.

7. The method of Claim 1, wherein the number of frames in the second set of frames is greater than the number of frames in the first set of frames, and wherein the pasting of the subset of the plurality of elements is into each of the second set of frames.

8. The method of Claim 7, wherein the pasting into each of the second set of frames is by repeating the subset of the plurality of elements.

9. A method comprising:
causing a plurality of elements to be displayed on a screen of a computing device, the plurality of elements including a first element within a first frame of a plurality of frames, a second element within a second frame of the plurality of frames, and a third element outside the plurality of frames;
receiving input that indicates an alignment operation to perform on a selection of multiple elements within the plurality of frames, wherein the selection includes the first element and the second element; and
in response to receiving the input, causing the third element to be aligned with the first element based on the third element being closest to the first frame of the plurality of frames;
wherein the method is performed by one or more computing devices.

10. The method of Claim 9, wherein the alignment operation comprises one of: top alignment, center alignment, or bottom alignment.

11. One or more non-transitory computer-readable storage medium storing instructions that, when executed by one or more processors, cause the one or more processors to perform functions comprising the method of any preceding claim.
